# EUROPÄISCHE PATENTSCHRIFT

(11) **EP 1 460 721 B1**
(45) Veröffentlichungstag und Bekanntmachung des Hinweises auf die Patenterteilung: **15.06.2011**
(21) Anmeldenummer: 03006083.4
(22) Anmeldetag: 19.03.2003
(51) Int. Cl.: H01R 9/26, H02B 1/052

(54) **Elektrisches Gerät mit Schnellbefestigung**
Electric appliance with quick fastening means
Appareil électrique à dispositif de fixation rapide

(43) Veröffentlichungstag der Anmeldung: 22.09.2004
(73) Patentinhaber: SIEMENS AKTIENGESELLSCHAFT, 80333 München (DE)
(72) Erfinder: Nörl, Gerald, 93133 Burglengenfeld (DE); Schmid, Bernhard, 93133 Burglengenfeld (DE)

(56) Entgegenhaltungen:
- EP-A- 0 184 143
- WO-A-97/31412
- DE-A- 3 802 174
- DE-A- 4 107 075
- DE-U- 8 712 955

## Beschreibung

Die Erfindung bezieht sich auf ein elektrisches Gerät, insbesondere ein Reiheneinbaugerät, mit einem auf eine Tragschiene montierbaren Gerätegehäuse. Ein solches Gerät ist dafür vorgesehen, stirnseitig in Reihe mit einer Vielzahl weiterer Geräte auf einer gemeinsamen normierten Tragschiene montiert zu werden. Es ist häufig als Schutzschalter oder als sonstiges Schalt- oder Steuergerät ausgeführt.

Das Gerätegehäuse eines derartigen, beispielsweise aus der DE 38 02 174 C2 bekannten Geräts ist üblicherweise an seinem Geräteboden an der Tragschiene fixiert. Als Geräteboden wird die der Gehäusefrontseite, d.h. der in montiertem Zustand einem Benutzer zugewandten Gehäuseseite, entgegengesetzte Gehäuseseite bezeichnet. Die Kontaktierung des Geräts erfolgt häufig an einer Gehäusequerseite über eine mehreren Geräten gemeinsame Sammelschiene.

Zur Befestigung des bekannten Geräts auf der Tragschiene ist eine Gehäuseführung vorgesehen, an deren einer Flanke eine Haltenase zur Umgreifung eines Tragschienenrandes angeformt ist. Eine zweite, dieser gegenüber stehende Haltenase ist Teil eines Schiebers, der quer zum Gerätegehäuse verschiebbar ist, um die Tragschiene je nach Schieberstellung zu fixieren oder freizugeben. Das bekannte Gerät ist weiterhin mit einem Riegelelement versehen, das an die Klemmschraube einer Kontaktklemme mechanisch gekoppelt ist. Beim Festschrauben der Klemmschraube wird das Riegelelement in eine korrespondierende Riegelöffnung des Schiebers hineingeschoben, so dass dieser hinsichtlich seiner Beweglichkeit blockiert ist.

Ein elektrisches Gerät ist nach dem Oberbegriff des Patentanspruchs 1, insbesondere aus der DE 41 07 075 A1 bekannt. Dieses elektrische Schaltgerät besitzt an seinem Boden einen Schieber, der mittels einer Feder in einer Schnappstellung festgehalten ist, in der eine am Schieber angeordnete bewegbare Nase gegen eine Seitenkante einer Hutprofiltragschiene gedrückt ist. Damit das Schaltgerät auch dann senkrecht zur der Hutprofiltragschiene demontiert werden kann, wenn eine Stromsammelschiene an einer zugehörigen Anschlussklemme angeschlossen ist, kann der Schieber um eine solche Strecke am Boden des Schaltgerätes verschoben werden, die der Breite einer Sammelschiene entspricht, so dass das Schaltgerät von dieser Sammelschiene freikommt.

Bei einer Ausführungsform ist der Schieberkörper an einem Schenkel einer U-förmigen Führung angebracht. Der andere Schenkel der U-förmigen Führungsschiene befindet sich außerhalb des Schiebers und ist in einem Aufnahmeraum hin- und hergeführt. An der Schmalseitenwand des Schaltgeräts ist ein nach außen offener Raum vorgesehen, in dem eine Stange angeordnet ist, die senkrecht zu den Breitseitenflächen verläuft. Auf dieser Stange ist ein Feststell- oder Halteelement hin- und herverschiebbar, mit dem der Schieber in seiner Schnappstellung festhaltbar ist.

Zur Verringerung des Montage- und Wartungsaufwands ist es wünschenswert, dass das Gerät - auch unter beengten Platzverhältnissen - auf einfache und schnelle Weise auf der Tragschiene befestigbar und von dieser lösbar ist. Hierbei soll insbesondere eine Montage und Demontage des Geräts möglich sein, ohne dass eine gegebenermaßen vorhandene Sammelschiene hierzu entfernt werden müsste.

Der Erfindung liegt somit die Aufgabe zugrunde, ein Gerät anzugeben, bei dem eine sichere und handhabungstechnisch besonders einfache Befestigung an einer Tragschiene ermöglicht ist.

Diese Aufgabe wird erfindungsgemäß gelöst durch die Merkmale des Patentanspruchs 1. Danach ist das Gerätegehäuse mit einer Gehäuseführung zur Aufnahme einer Tragschiene versehen, an deren Flanken einander gegenüber stehende Haltenasen zur formschlüssigen Umgreifung der Tragschiene vorgesehen sind. Eine erste Haltenase ist hierbei gehäusefest angeordnet, während die zweite Haltenase Teil eines quer zur Profilachse der Gehäuseführung zwischen einer Schließstellung und einer Öffnungsstellung verschiebbaren Schiebers ist. Zur Vorspannung des Schiebers in Richtung seiner Schließstellung ist ein Federelement vorgesehen. Als Widerlager für das Federelement ist ein Riegelelement vorgesehen, welches derart im Gerätegehäuse beweglich geführt ist, dass das Federelement durch das Riegelelement abstützbar bzw. freigebbar ist. Das Riegelelement ist so angeordnet, dass es sich senkrecht zum Schieber im Gerätegehäuse zur Gehäusefrontseite erstreckt und mit einem von der Gehäusefrontseite aus zugänglichen Betätigungsende versehen ist.

Durch das dem Schieber und dem Riegelelement zwischengeschaltete Federelement ist eine besonders einfache Handhabung des Geräts im Hinblick auf dessen Montage auf einer Tragschiene ermöglicht. Insbesondere ist der Schieber über das Federelement mechanisch weich mit dem Riegelelement gekoppelt, so dass das Gerät in verriegeltem wie in unverriegeltem Zustand auf die Tragschiene aufsetzbar ist. Zur Entriegelung des Geräts genügt es, das Riegelelement in seine Freigabestellung zu bewegen, wodurch das Federelement entspannt wird und der Schieber sich quasi drucklos in seine Öffnungsstellung verfahren lässt. Hierdurch kann die Gehäuseführung zu Demontagezwecken vorteilhafterweise besonders stark erweitert werden. Das Gerät ist somit auf einfache, insbesondere leicht einhändig durchzuführende Weise von der Tragschiene abnehmbar. Insbesondere ist hierbei die Demontage des Geräts bei vorhandener Sammelschiene erleichtert.

Dadurch, dass das Riegelelement mit einem Betätigungsende versehen ist, das von der Gehäusefrontseite aus einem Benutzer zugänglich ist, ist auch unter beengten Platzverhältnissen eine einfache Demontage des Geräts sichergestellt.

In konstruktiv besonders einfacher Ausgestaltung ist das Festende des Federelements am Schieber festgelegt, insbesondere einstückig angeformt. Das Federelement ist in platzsparender Ausführung bevorzugt innerhalb des Schiebers angeordnet.

Die lösbare mechanische Kopplung des Federelements an das Riegelelement ist zweckmäßig durch ein freiendseitig des Federelements angeordnetes Rastende realisiert, welches in Schließstellung des Schiebers an dem in seiner Sperrstellung befindlichen Riegelelement verrastet ist.

Zur weiteren Handhabungsvereinfachung ist das Riegelelement bevorzugt durch Federkraft in Richtung seiner Sperrstellung vorgespannt. Gemäß zwei vorteilhaften Ausführungsvarianten ist zur Erfindung alternativ vorgesehen, dass das Riegelelement durch Zugbelastung am Betätigungsende oder durch Druckbelastung auf das Betätigungsende aus seiner Sperrstellung in seine Freigabestellung verschiebbar ist. Weiterhin ist auch der Schieber vorzugsweise mit einem aus dem Gerätegehäuse herausragenden Betätigungsende versehen.

Zur Vereinfachung des Montagevorgangs ist vorgesehen, dass jede Haltenase an ihrer vom Gerätegehäuse abgewandten Seite mit einer Aufgleitschräge für die Tragschiene versehen ist. Bevorzugt nimmt die Aufgleitschräge mit dem Gehäuseboden einen Winkel α ≥ 45° ein.

Nachfolgend werden Ausführungsbeispiele der Erfindung anhand einer Zeichnung näher erläutert. Darin zeigen:
- FIG 1: in einer schematischen, teilweise aufgeschnittenen Draufsicht ein auf einer Tragschiene aufmontiertes elektrisches Gerät,
- FIG 2: in einer Darstellung gemäß FIG 1 das Gerät in von der Tragschiene gelöster Stellung,
- FIG 3: in einer Darstellung gemäß FIG 1 das Gerät vor Montage auf die Tragschiene,
- FIG 4: in Draufsicht das Gerät gemäß FIG 1 in einer alternativen Stellung vor Montage auf die Tragschiene,
- FIG 5: in einer Darstellung gemäß FIG 1 eine alternative Ausführungsform des Geräts, und
- FIG 6: in perspektivischer Darstellung das Gerät gemäß FIG 5.

Einander entsprechende Teile sind in allen Figuren mit den gleichen Bezugszeichen versehen.

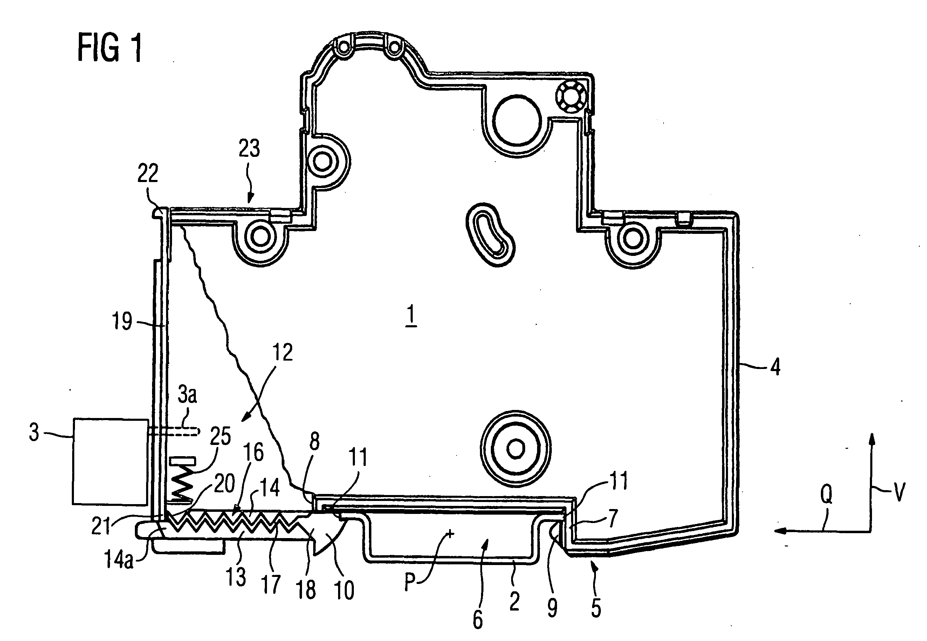

FIG 1 zeigt ein elektrisches Gerät 1, insbesondere ein Reiheneinbaugerät, das auf einer Tragschiene 2 aufmontiert ist. In Anlehnung an ihre Profilform ist die Tragschiene 2 gewöhnlich auch als Hutschiene bezeichnet. Das Gerät 1 ist seitlich mit einer Sammelschiene 3 kontaktiert, die mit einem Steckkontakt 3a in das Gerät 1 eindringt. Das Gerät 1 umfasst ein flaches Gerätegehäuse 4, das in der Darstellung teilweise aufgeschnitten ist, und das an einem Gehäuseboden 5 eine nutartige Gehäuseführung 6 zur Aufnahme der Tragschiene 2 aufweist.

Die Profilachse P der Tragschiene 2 und der korrespondierenden Gehäuseführung 6 ist in der Darstellung senkrecht zur Zeichnungsebene ausgerichtet. Die innerhalb einer zum Gehäuseboden 5 parallelen Ebene zur Profilachse P senkrechte Richtung ist als Querrichtung Q bezeichnet. Das Lot auf eine zum Gehäuseboden 5 parallelen Ebene, d.h. die zur Profilachse P und der Querachse Q senkrechte Richtung ist als Vertikale V bezeichnet. Die Vertikale V ist identisch mit der Einschubrichtung der Tragschiene 2 in die Gehäuseführung 6.

Zur Halterung der Tragschiene 2 in der Gehäuseführung 6 sind zwei an den Flanken 7 bzw. 8 der Gehäuseführung 6 angeordnete Haltenasen 9 und 10 angeordnet, die aufeinander zu gerichtet sind und gemäß FIG 1 die Profilränder 11 der Tragschiene 2 formschlüssig umgreifen und das Gerät 1 somit an der Tragschiene 2 fixieren. Während die Haltenase 9 ortsfest mit dem Gerätegehäuse 4 verbunden ist, insbesondere einstückig am Gerätegehäuse angeformt ist, ist die Haltenase 10 Teil einer Schnellbefestigung 12, die eine einfache und schnelle Montage des Geräts 1 auf der Tragschiene 2 bzw. Demontage von der Tragschiene 2 ermöglicht. Die Schnellbefestigung 12 umfasst einen die Haltenase 10 tragenden Schieber 13, der in Querrichtung Q verschiebbar im Gerätegehäuse 4 geführt ist. FIG 1 zeigt den Schieber 13 in seiner Schließstellung.

Der Schieber 13 ist rahmenartig aufgebaut und umfasst zwei Seitenwände 14 (von denen in der Schnittdarstellung gemäß FIG 1 nur eine sichtbar ist). Die Seitenwände 14 umschließen somit einen hohlen Innenraum 16, in dem ein nur schematisch dargestelltes Federelement 17 einliegt. Das Federelement 17 ist an seinem der Haltenase 10 zugewandten Festende 18 ortsfest mit dem Schieber 13 verbunden, insbesondere einstückig an diesen angeformt und erstreckt sich von dort bevorzugt mäanderartig in Querrichtung Q. Das dem Festende 18 entgegen gesetzte Freiende des Federelements 17 steht über die in diesem Bereich 14a abgestuften Seitenwände 14 in vertikaler Richtung hervor. Das Freiende des Federelements 17 ist somit zur Verrastung des Schiebers 13 an einem Riegelelement 19 ausgebildet und ist aus diesem Grund nachfolgend als Rastende 20 bezeichnet.

Das Riegelelement 19 ist stäbchen- oder plättchenförmig ausgebildet und entlang der Vertikale V im Gerätegehäuse 4 verschiebbar geführt. Das Riegelelement 19 weist ein mit dem Federelement 17 zusammenwirkendes Sperrende 21 auf. Das entgegengesetzte Ende des Riegelelements 19 ist als Betätigungsende 22 zur händischen Betätigung des Riegelelements 19 vorgesehen und steht an der dem Gehäuseboden 5 entgegengesetzten Gehäusefrontseite 23 aus dem Gerätegehäuse 4 hervor.

FIG 1 zeigt das Riegelelement 19 in seiner Sperrstellung. Hierbei ragt das Sperrende 21 des Riegelelements 19 an den abgestuften Bereich 14a der Seitenwände 14 heran, so dass das Rastende 20 des Federelements 17 am Sperrende 21 anliegt. Das Riegelelement 19 dient somit als Widerlager für das Federelement 17. Der Schieber 13 ist hierdurch in seiner Schließstellung federnd fixiert, d.h. nur unter Überwindung der durch das Federelement 17 auf den Schieber ausgeübten Federkraft in Querrichtung Q verschiebbar, und bei in der Gehäuseführung einliegender Tragschiene 2 vorgespannt. Das Riegelelement 19 wird von einem nur schematisch angedeuteten Federelement 25 in seiner Sperrstellung vorgespannt. Dieses Federelement 25 kann als Druck- oder Zugfeder oder als einstückig an das Riegelelement 19 angeformter Federlappen ausgebildet sein.

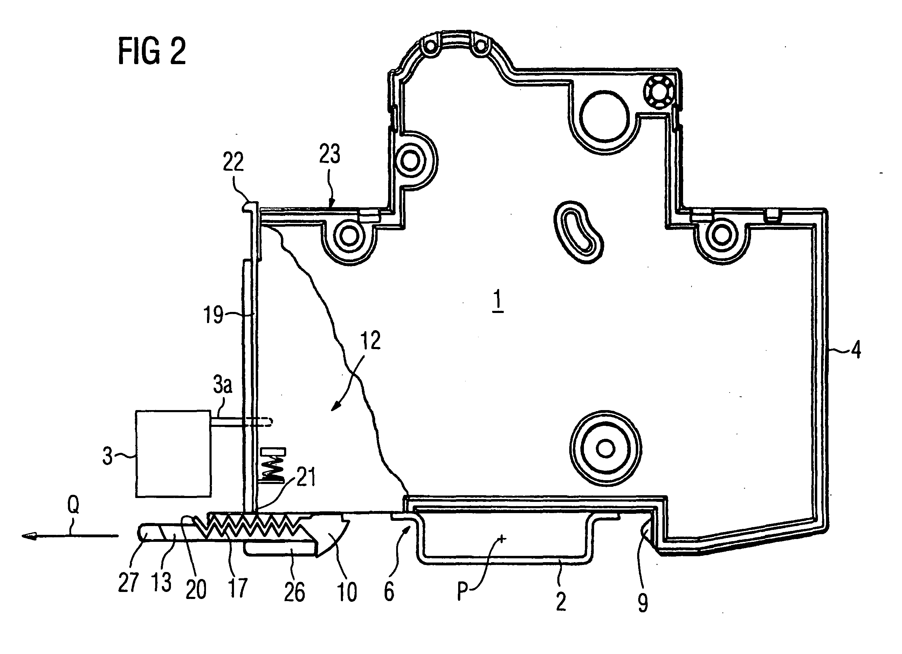

Zur Demontage des Geräts 1 von der Tragschiene 2 wird das Riegelelement 19 durch Zugbelastung am Betätigungsende 22 in Richtung der Gehäusefrontseite 23 in die in FIG 2 dargestellte Freigabestellung gezogen. Das Sperrende 21 des Riegelelements 19 wird hierdurch aus der Eingriffsstellung mit dem Rastende 20 des Federelements 17 entfernt. Mit anderen Worten wird das Federelement 17 entspannt, so dass nunmehr der Schieber 13 in Querrichtung Q frei beweglich ist.

Die Demontage des Gerätes 1 von der Tragschiene 2 erfolgt nun, indem das Gerätegehäuse 4 entgegen der Querrichtung Q gegenüber der Tragschiene 2 verschoben wird. Hierdurch verschiebt die Tragschiene 2 den Schieber 13 von seiner in FIG 1 dargestellten Schließstellung in die in FIG 2 dargestellte Öffnungsstellung. Hierdurch wird die Gehäuseführung 6 in Querrichtung Q erweitert, so dass die Haltenasen 9 und 10 aus der Eingriffsstellung mit der Tragschiene 2 entfernt werden und das Gerät 1 infolgedessen von der Tragschiene 2 abgehoben werden kann. Der Verschiebeweg des Schiebers 13 in Richtung seiner Öffnungsstellung wird erst begrenzt durch den Anschlag der Haltenase 10 an einem korrespondierenden Gehäuseanschlag 26. Durch die in Öffnungsstellung des Schiebers 13 stark erweiterte Gehäuseführung 6 kann das Gerätegehäuse 4 bezüglich der Tragschiene 2 und der damit ortsfesten Sammelschiene 3 insbesondere so weit verschoben werden, dass der Steckkontakt 3a vollständig aus dem Gerätegehäuse 4 herausgezogen ist. Das Gerät 1 kann somit von der Tragschiene 2 abgezogen werden, ohne dass eine vorausgehende Demontage der Sammelschiene 3 erforderlich wäre.

Das der Haltenase 10 entgegengesetzte Ende des Schiebers 13, das nachfolgend als Betätigungsende 27 bezeichnet ist, ragt zumindest in der Öffnungsstellung in Querrichtung Q aus dem Gerätegehäuse 4 hervor. Durch Druck auf dieses Betätigungsende 27 wird Schieber 13 bei demontiertem Gerät 1 auf einfache Weise wieder in seine Schließstellung zurückverfahren. Hierbei schnappt das federbeaufschlagte Riegelelement 19 selbsttätig in seine Sperrstellung zurück, wodurch der in FIG 1 dargestellte Zustand des Geräts 1 im Wesentlichen wiederhergestellt ist. Insbesondere ist das Federelement 17 wieder widergelagert.

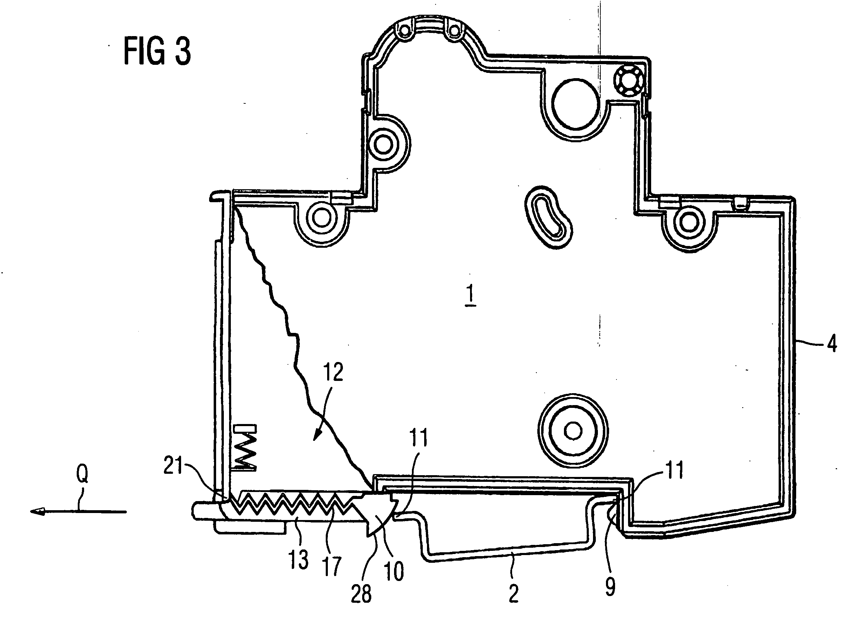

Die erfindungsgemäße Schnellbefestigung 12 erlaubt eine einfache und flexible Montage des Geräts 1 auf der Tragschiene 2. Gemäß FIG 3 wird hierzu das Gerät 1 mit verriegelter Schnellbefestigung 12, d.h. mit hinter dem Sperrende 21 verrastetem Federelement 17 und sich in Schließstellung befindendem Schieber 13, schräg auf die Tragschiene 2 aufgesetzt, so das die ortsfeste Haltenase 9 den korrespondierenden Profilrand 11 der Tragschiene 2 umgreift, und der entgegengesetzte Profilrand 11 auf der als Aufgleitschräge 28 ausgebildeten Außenseite der Haltenase 10 aufliegt. Unter Druckbelastung der Aufgleitschräge 28 durch die Tragschiene 2 weicht der Schieber 13 unter Überwindung der Federkraft des Federelements 17 in Querrichtung Q zurück, bis die Tragschiene 2 hinter der Haltenase 10 einschnappt.

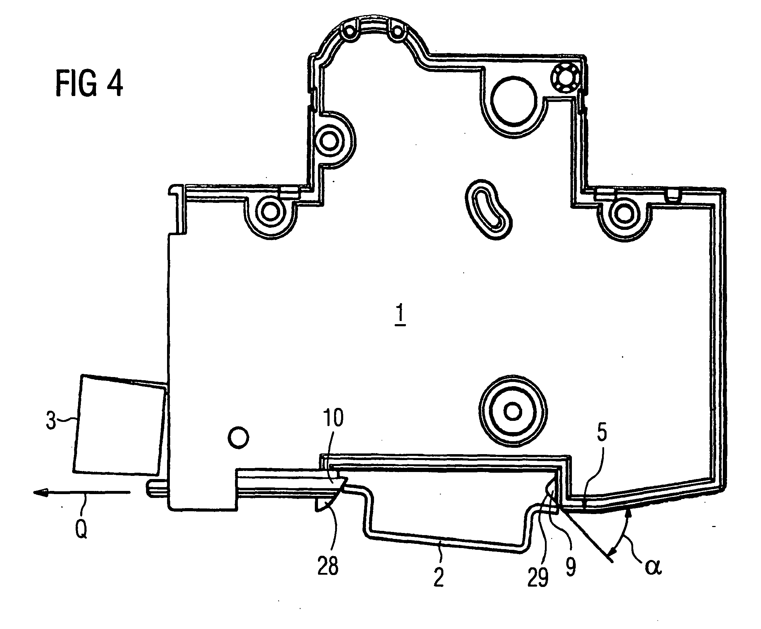

Alternativ kann das Gerät 1 gemäß FIG 4 auch in horizontaler Stellung oder mit der Haltnase 10 voran auf die Tragschiene 2 aufgeschnappt werden. Dies erlaubt die Montage des Geräts 1 bei vorhandener Sammelschiene 3. Das Gerät 1 wird hierzu zunächst auf den Steckkontakt 3a der Sammelleiste 3 aufgesteckt und anschließend auf die Tragschiene 2 aufgedrückt. Durch die mechanische Zusammenwirkung der Tragschiene 2 mit der Aufgleitschräge 28 der Haltenase 10 und einer entsprechenden Aufgleitschräge 29 der Haltenase 9 wird wiederum der Schieber 13 zurückgedrängt, bis die Tragschiene hinter den Haltenasen 9 und 10 einschnappt. Um ein leichtes Abgleiten der Tragschiene 2 über den Aufgleitschrägen 28 und 29 zu ermöglichen, nehmen die Aufgleitschrägen 28 und 29 mit dem Gehäuseboden 5 jeweils ein Winkel α ≥ 45° ein.

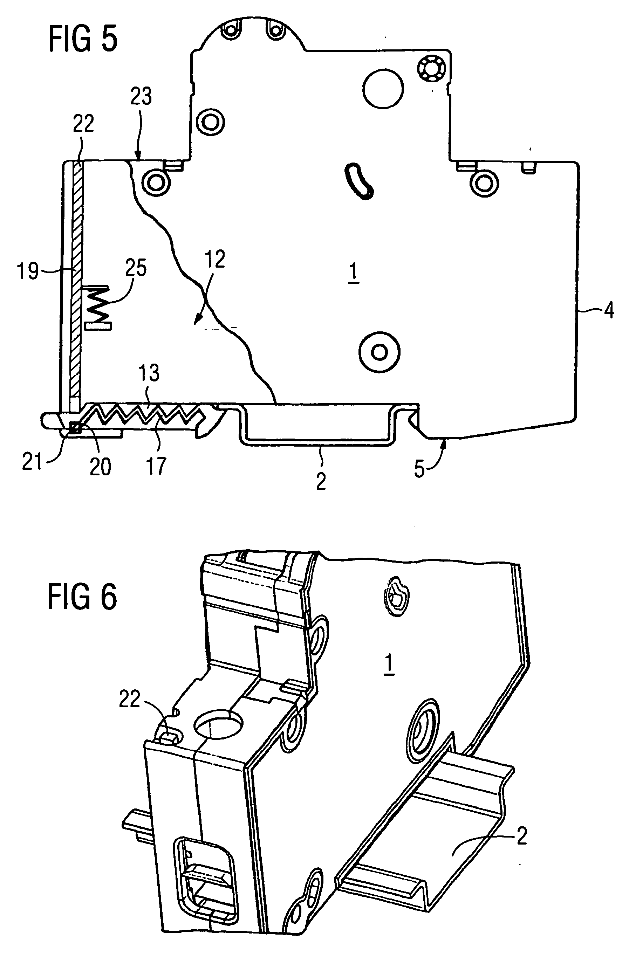

In den FIG 5 und 6 ist eine alternative Ausführungsform des Geräts 1 dargestellt. Diese unterscheidet sich von der in den FIG 1 bis 4 gezeigten Ausführung dadurch, dass das Sperrende 21 des Riegelelements 19 an der dem Gehäuseboden 5 zugewandten Seite des Schiebers 13 angreift. Das Rastende 20 ist in der in FIG 5 dargestellten Sperrstellung des Riegelelements 19 wiederum am Sperrende 21 verastet. Die Entriegelung der Schnellbefestigung 12 erfolgt hier durch Druckbelastung des nach wie vor von der Gehäusefrontseite 23 aus zugänglichen Betätigungsende 22 des Riegelelements 19. Das Riegelelement 19 wird hierdurch in Richtung des Gehäusebodens 5 verschoben, wodurch das Sperrende 21 das Federelement 17 entspannt. Wie insbesondere aus FIG 6 erkennbar ist, ist das Betätigungsende 22 hier knopfartig ausgebildet und mit einem spitzen Gegenstand, z.B. einem Schraubendreher betätigbar.

## Patentansprüche

1. Elektrisches Gerät (1) mit einem auf eine Tragschiene (2) montierbaren Gerätegehäuse (4), mit einer Gehäuseführung (6) zur Aufnahme der Tragschiene (2), mit zwei einander gegenüberstehenden, an den Flanken (7,8) der Gehäuseführung (6) angeordneten Haltenasen (9,10) zur formschlüssigen Umgreifung der Tragschiene (2), wobei eine erste Haltenase (9) gehäusefest angeordnet ist, und die zweite Haltenase (10) Teil eines quer zur Profilachse (P) der Gehäuseführung (6) zwischen einer Schließstellung und einer Öffnungsstellung verschiebbaren Schiebers (13) ist, mit einem Federelement (17), mittels welchem der Schieber (13) in Richtung einer Schließstellung widerlagerbar ist und mit einem zwischen einer Sperrstellung und einer Freigabestellung beweglichen Riegelelement (19), wobei das Federelement (17) in der Sperrstellung von dem Riegelelement (19) abgestützt ist und in der Freigabestellung freigegeben ist, **dadurch gekennzeichnet , dass**
das Riegelelement (19) sich senkrecht zum Schieber (13) im Gerätgehäuse (4) zur Gehäusefrontseite (23) erstreckend angeordnet ist und mit einem von der Gehäusefrontseite (23) aus zugänglichen Betätigungsende (22)versehen ist.

2. Gerät (1) nach Anspruch 1, **dadurch gekennzeichnet, dass** ein Festende (18) des Federelements (17) am Schieber (13) festgelegt ist.

3. Gerät (1) nach Anspruch 1 oder 2, **dadurch gekennzeichnet, dass** das Federelement (17) einstückig am Schieber (13) angeformt ist.

4. Gerät (1) nach einem der Ansprüche 1 bis 3, **dadurch gekennzeichnet, dass** das Federelement (17) innerhalb des Schiebers (13) geführt ist.

5. Gerät (1) nach einem der Ansprüche 1 bis 4, **dadurch gekennzeichnet, dass** ein Rastende (20) des Federelements (17) in Schließstellung des Schiebers (13) und Sperrstellung des Riegelelements (19) an einem Sperrende (21) des Riegelelements (19) verrastet ist.

6. Gerät (1) nach einem der Ansprüche 1 bis 5, **dadurch gekennzeichnet, dass** das Riegelelement (19) durch Federkraft in Richtung der Sperrstellung vorgespannt ist.

7. Gerät (1) nach einem der Ansprüche 1 bis 6, **dadurch gekennzeichnet, dass** das Riegelelement (19) durch Zugbelastung am Betätigungsende (22) von seiner Sperrstellung in seine Freigabestellung verschiebbar ist.

8. Gerät (1) nach einem der Ansprüche 1 bis 6, **dadurch gekennzeichnet , dass** das Riegelelement (19) durch Druckbelastung auf das Betätigungsende (22) von seiner Sperrstellung in seine Freigabestellung verschiebbar ist.

9. Gerät (1) nach einem der Ansprüche 1 bis 8, **dadurch gekennzeichnet, dass** ein Betätigungsende (27) des Schiebers (13) aus dem Gerätegehäuse (4) herausragt.

10. Gerät (1) nach einem der Ansprüche 1 bis 9, **dadurch gekennzeichnet, dass** die oder jede Haltenase (9,10) an ihrer vom Gerätegehäuse (4) abgewandten Seite mit einer Aufgleitschräge (28,29) für die Tragschiene (2) versehen ist.

## Claims

1. Electrical device (1) with a device housing (4) able to be mounted on a support rail (2), with a housing guide (6) to accept the support rail (2), with two opposing retaining lugs (9, 10) arranged at the edges (7, 8) of the housing guide (6) to make a form fit engaging with the support rail (2), with a first retaining lug (9) being arranged fixed to the housing and the second retaining lug (10) being part of a slider (13) able to be moved transverse to the profile axis (P) of the housing guide (6) between a closed position and an open position, with a spring element (17), by means of which the slider (13) is able to be abutted in the direction of a closed position and with a locking element (19) able to be moved between a locked position and a release position, with the spring element (17) being supported in the locked position by the locking element (19) and being released in the release position, **characterised in that**
the locking element (19) is arranged at right angles to the slider (13) in the device housing (4) extending towards the front side (23) of the housing and is provided with an actuation end (22) accessible from the front side (23) of the housing.

2. Device (1) according to claim 1, **characterised in that** a fixed end (18) of the spring element (17) is defined on the slider (13).

3. Device (1) according to claim 1 or 2, **characterised in that** the spring element (17) is formed in one piece on the slider (13).

4. Device (1) according to one of claims 1 to 3, **characterised in that** the spring element (17) is guided within the slider (13).

5. Device (1) according to one of claims 1 to 4, **characterised in that** a latching end (20) of the spring element (17), in the closed position of the slider (13) and locking position of the locking element (19), is latched onto a locking end (21) of the locking element (19).

6. Device (1) according to one of claims 1 to 5, **characterised in that** the locking element (19) is pretensioned by spring force in the direction of the locking position.

7. Device (1) according to one of claims 1 to 6, **characterised in that** the locking element (19) is able to be moved by tensile loading at the actuation end (22) from its locking position into its release position.

8. Device (1) according to one of claims 1 to 6, **characterised in that** the locking element (19) is able to be moved by compressive loading at the actuation end (22) from its locking position into its release position.

9. Device (1) according to one of claims 1 to 8, **characterised in that** an actuation end (27) of the slider (13) protrudes from the device housing (4).

10. Device (1) according to one of claims 1 to 9, **characterised in that** the retaining lug or each retaining lug (9, 10) is provided with a slide-on taper (28, 29) for the support rail (2) on its side facing away from the device housing (4).

## Revendications

1. Appareil électrique (1) comprenant un boîtier d'appareil (4) pouvant être monté sur un rail porteur (2), un guide de boîtier (6) pour le logement du rail porteur (2), deux ergots de retenue (9, 10) se faisant face et disposés sur les flancs (7, 8) du guidage de boîtier (6) pour l'enveloppement par complémentarité de forme du rail porteur (2), un premier ergot de retenue (9) étant disposé de façon solidaire du boîtier, et le second ergot de retenue (10) faisant partie d'un coulisseau (13) pouvant se déplacer transversalement à l'axe de profil (P) du guidage de boîtier (6) entre une position de fermeture et une position d'ouverture, un élément de ressort (17), au moyen duquel le coulisseau (13) peut être à nouveau logé en direction d'une position de fermeture et un élément de verrou (19) mobile entre une position de blocage et une position de libération, l'élément de ressort (17) étant soutenu dans la position de blocage par l'élément de verrou (19) et étant libéré dans la position de libération, **caractérisé en ce que**
l'élément de verrou (19) est disposé en s'étendant perpendiculairement au coulisseau (13) dans le boîtier d'appareil (4) en direction du côté avant de boîtier (23) et est doté d'une extrémité d'actionnement (22) accessible à partir du côté avant du boîtier (23).

2. Appareil (1) selon la revendication 1, **caractérisé en ce qu'**une extrémité fixe (18) de l'élément de ressort (17) est fixée sur le coulisseau (13).

3. Appareil (1) selon la revendication 1 ou 2, **caractérisé en ce que** l'élément de ressort (17) est formé d'une seule pièce sur le coulisseau (13).

4. Appareil (1) selon l'une quelconque des revendications 1 à 3, **caractérisé en ce que** l'élément de ressort (17) est guidé à l'intérieur du coulisseau (13).

5. Appareil (1) selon l'une quelconque des revendications 1 à 4, **caractérisé en ce qu'**une extrémité d'encliquetage (20) de l'élément de ressort (17) est encliquetée dans la position de fermeture du coulisseau (13) et la position de blocage de l'élément de verrou (19) sur une extrémité de blocage (21) de l'élément de verrou (19).

6. Appareil (1) selon l'une quelconque des revendications 1 à 5, **caractérisé en ce que** l'élément de verrou (19) est précontraint par la force de ressort en direction de la position de blocage.

7. Appareil (1) selon l'une quelconque des revendications 1 à 6, **caractérisé en ce que** l'élément de verrou (19) peut être déplacé par sollicitation de traction sur l'extrémité d'actionnement (22) de sa position de blocage dans sa position de libération.

8. Appareil (1) selon l'une quelconque des revendications 1 à 6, **caractérisé en ce que** l'élément de verrou (19) peut être déplacé par sollicitation de pression sur l'extrémité d'actionnement (22) de sa position de blocage dans sa position de libération.

9. Appareil (1) selon l'une quelconque des revendications 1 à 8, **caractérisé en ce qu'**une extrémité d'actionnement (27) du coulisseau (13) dépasse du boîtier d'appareil (4).

10. Appareil (1) selon l'une quelconque des revendications 1 à 9, **caractérisé en ce que** le ou chaque ergot de retenue (9, 10) est doté sur son côté opposé au boîtier d'appareil (4) d'un chanfrein de glissement (28, 29) pour le rail porteur (2).
